# EUROPÄISCHE PATENTSCHRIFT

(11) **EP 0 691 355 B1**
(45) Veröffentlichungstag und Bekanntmachung des Hinweises auf die Patenterteilung: **21.04.1999**
(21) Anmeldenummer: 95110071.8
(22) Anmeldetag: 28.06.1995
(51) Int. Cl.: C08F 220/12, C08F 220/28, C08F 220/18, C10M 145/14

(54) **Dispergierwirksame Cooligomere und Copolymere**
Cooligomers and copolymers with dispersant activity
Cooligomère et copolymère à action dispersant

(30) Priorität: 04.07.1994 DE 4423358
(43) Veröffentlichungstag der Anmeldung: 10.01.1996
(73) Patentinhaber: Röhm GmbH, 64293 Darmstadt (DE)
(72) Erfinder: Auschra, Clemens, Dr., D-55122 Mainz (DE); Pennewiss, Horst, Dr., D-64289 Darmstadt (DE); Graner, Susanne, D-64572 Büttelborn (DE)

(56) Entgegenhaltungen:
- EP-A- 0 418 610

## Beschreibung

### Gebiet der Erfindung

Die Erfindung betrifft dispergierwirksame Cooligomere und Copolymere auf Basis von Estern der (Meth)acrylsäure mit alkoxilierten Alkoholen mit bestimmtem Gehalt an Ethylenoxid- bzw. Propylenoxideinheiten, als Emulgatoren speziell für W/O-Emulsionen, die sich besonders für die Anwendung auf dem Schmierölgebiet (als sog. "Ashless Dispersants") eignen.

### Stand der Technik

Die Ansprüche der Technik an die Leistungsfähigkeit von Schmierölen sind in den letzten Jahrzehnten gestiegen, u.a. im Zusammenhang mit den modernen Entwicklungen auf dem Motorensektor. Besonderes Gewicht erhielten die Aspekte der thermischen Stabilität, der Verhinderung von Ablagerungen und des Verschleißschutzes bei hohen Temperaturen (vgl. Ullmann's Encyclopedia of Industrial Chemistry, 5th Ed. Vol. A15, 448 - 465, VCH 1990). Die Eigenschaften der Schmieröle lassen sich gezielt beeinflussen durch Schmieröladditive. Über Jahrzehnte hinweg waren es vor allem Metallsalze, die den Schmierölen die nötige Detergenzwirkung verliehen. Dann wurden die sogenannten "Ash-free"-(Ashless) Detergentien eingeführt, in der Regel Polymerverbindungen mit funktionellen polaren Gruppen, die gewöhnlich gleichzeitig Viskositätsindexverbessernde oder Stockpunkt-erniedrigende Wirkung besitzen (vgl. J. Briant, J. Denis, G. Parce, Rheological Properties of Lubricants, pg. 179 - 181, Editions Technip 1989).
Zum Einsatz sind insbesondere Poly(meth)acrylsäureester und Polyolefine gekommen, die mit polaren stickstoffhaltigen oder sauerstoffhaltigen Gruppen funktionalisiert worden waren. Aus den deutschen Patentschriften DE 15 20 696, 17 45 359, 28 05 826, 29 05 954, 32 07 291 und 32 07 292 sind Polyalkylmethacrylate und sogenannte "Mixed Polymers" aus Polyalkylmethacrylaten und Olefincopolymeren (OCP) mit stickstoffhaltigen funktionellen Gruppen bekannt. Es gibt Hinweise, daß diese auf Grund ihrer funktionellen Gruppen einerseits die verschleißverhindernden Additve ungünstig beeinflussen und andererseits Elastomerdichtungen angreifen. Demgegenüber sind die Polyalkylmethacrylate und "Mixed Polymers" der DE-A 39 30 142 verbessert, da sie anstelle der stickstoffhaltigen funktionellen Gruppen nur Gruppen mit den Elementen Kohlenstoff, Wasserstoff und Sauerstoff enthalten. Allerdings hat sich gezeigt, daß Polyalkylmethacrylate und "Mixed Polymers" mit den in DE-A 39 30 142 genannten, alkoxylierten Gruppen bei höheren Alkoxylierungsgraden (> 20) in Mineralölformulierungen zunehmend schwerer löslich werden. Andererseits ist auf der niederpolymeren bzw. oligomeren Seite die Klasse der Polyisobutenylsuccinimide als aschefreie Dispergiermittel sehr bekannt. Diese haben die Nachteile der oben beschriebenen, stickstoffhaltigen Polyalkylmethacrylate und OCP und dicken zusätzlich bei tiefen Temperaturen die Ölformulierungen stark ein. Letzteres erfordert die Mitverwendung von oft unerwünschten Grundölkomponenten mit relativ niedriger Viskosität.

### Aufgabe und Lösung

Deshalb besteht nach wie vor Bedarf an nichtaschebildenden Dispergiermitteln, die bei tiefen Temperaturen wenig zur Verdickung der Grundöle beitragen, in unterschiedlichen Formulierungsrezepturen jeweils gut löslich sind und die Wirkung der Verschleißschutzadditive möglichst nicht stören bzw. selbst Verschleißschutzeigenschaften aufweisen. Erwünscht waren ferner Emulgatoren, die zur Stabilisierung von Wasser-in-Öl-Emulsionen geeignet sind. Sie sollten selbst gutes motorisches Verhalten zeigen. So sollen beispielsweise Dichtungen und metallische Teile nicht angegriffen werden (vgl. Ullmann's Encyclopedia loc.cit., Vol. A15, pg. 453) Es wurde nun gefunden, daß bestimmte Cooligomere bzw. Copolymere die Aufgabe besonders gut erfüllen. Die Erfindung betrifft somit dispergierwirksame Cooligomere und Copolymere (CNP) auf Basis von (Meth)acrylsäureestern als Emulgatoren, die aufgebaut sind aus den Komponenten
A) 60 - 95 Gew-% mindestens eines (Meth)acrylsäureesters der Formel I 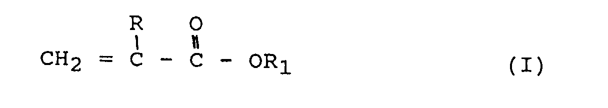 worin R für Wasserstoff oder Methyl und R₁ für einen gegebenenfalls verzweigten Alkylrest oder einen Cycloalkylrest mit 4 bis 32, vorzugsweise 6 bis 30, insbesondere 8 bis 26 Kohlenstoffatomen im Alkylrest und
B) 5 - 40 Gew.-% eines (Meth)acrylsäureesters der Formel II 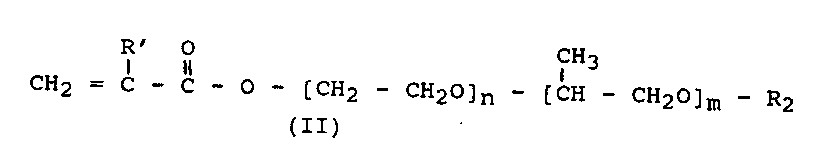 worin R' für Wasserstoff oder Methyl und R₂ für einen Alkyl- oder einen Arylrest mit 1 bis 50 Kohlenstoffatomen steht, wobei R₂ selbst durch Stickstoff oder Schwefel substituiert sein kann und worin n einen Zahlenwert 5 bis 100 und m einen Zahlenwert 0 bis 100 darstellen kann und zu 0 bis 90 Molprozent bezogen auf die Monomeren der Formel II eines Hydroxyalkyl(meth)acrylsäureesters der Formel III 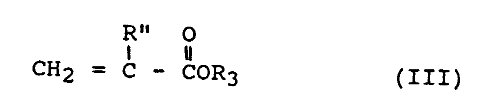 worin R'' für Wasserstoff oder Methyl und R₃ für einen mit mindestens einer Hydroxylgruppe substituierten Alkylrest mit 2 bis 26, insbesondere 2 bis 12 Kohlenstoffatomen steht mit der Maßgabe, daß sich A) und B) zu 100 Gew.-% ergänzen und
C) 0 - 75 Gew.-Teile bezogen auf die Summe von A) und B) mindestens eines 1-Alkylens mit 4 bis 42 Kohlenstoffatomen im Molekül, wobei die Cooligomeren und Copolymeren (CNP) bei Bestimmung durch Gelpermeationschromatographie Molekulargewichte (M_{w}) von 1000 bis 30 000 Dalton besitzen.

Von besonderem Interesse sind u.a. Cooligomere und Copolymere CNP bei denen der Rest R₂ in Formel II mit mindestens einer Gruppe -NR₄R₅ substituiert ist, wobei R₄ und R₅ unabhängig von einander für einen Alkylrest mit 1 bis 20 Kohlenstoffatomen stehen oder worin R₄ und R₅ unter Einbeziehung des Stickstoffatoms und gegebenenfalls eines weiteren Sauerstoff- oder Stickstoffatoms einen fünf- oder sechs-gliedrigen Ring bilden, der mit einem C₁-C₆-Alkylrest substituiert sein kann.
Genannt seien beispielsweise die Dimethylaminogruppe, die Diethylaminogruppe, die Methyl-isopropylaminogruppe, die Piperidinogruppe, die Pyrrolidinogruppe, die Morpholinogruppe u.ä.

### Die Cooligomeren und Copolymere (CNP)

Die Molekulargewichte (M_{w}) der Cooligomeren und Copolymeren liegen im Bereich 1000 bis 30 000 Dalton, insbesondere im Bereich 3 000 bis 30 000 Dalton (Bestimmung durch Gelpermeationschromatographie, s. H.F. Mark et al. Encyclopedia of Polymer Science and Technology, Vol. 10, 1 - 19, J. Wiley 1987; J.V. Dawkins Comprehensive Polymer Science, Vol. 1, 231 (1989), Pergamon Press).
Als Monomeren der Formel I kommen besonders (Meth)acrylsäureester von Gemischen höherer Alkohole, insbesondere aus dem Bereich C₉ bis C₂₀, insbesondere C₁₀ bis C₁₈ mit wechselnden Verzweigungsgraden im Bereich 25 bis über 80 %, z.B. solche, die aus den großtechnischen Herstellungsverfahren wie der Oxosynthese anfallen, in Betracht.
Genannt seien z.B. die Ester der sogenannten DOBANOL ®-Alkohole (Produkte der Fa. Shell), der sogenannten ALFOL ® -Alkohole (Produkte der Fa. Condea), der sogenannten LOROL ®-Alkohole, der Talgfettalkohole u.ä.
Von besonderem Interesse sind z.B. Ester von Alkoholgemischen aus isomeren Isodecylalkoholen, Estern von Alkoholgemischen aus isomeren Isoundecylalkoholen ferner Ester eines Alkoholgemischs mit Durchschnitts-C-Zahl 13,2 - 13,8 und einem überwiegenden Gehalt an C₁₂-C₁₅-Alkoholen (DOBANOL ® 25L). Gut brauchbar sind auch die Ester von cyclischen Alkanolen z.B. mit 5 bis 8 Ringkohlenstoffatomen, wie z.B. von Cyclopentanol, Cyclohexanol, Cyclooctanol, Benzylalkohol, alkylsubstituierte Cyclohexanole wie z.B. 4-tert.-Butylcyclohexanol.

Als Verbindungen der Formel II kommen z.B. die (Meth)acrylsäureester von alkoxylierten aliphatischen Alkoholen, wie z.B. alkoxyliertem Butanol und weitere alkoxylierte Alkohole ausgehend von: Methanol, Ethanol, Propanol, Pentanol (+ Isomere), Hexanol (+ Isomere), Cyclohexanol, Methylcyclohexanol, 2-Ethylhexanol und höheren aliphatischen einwertigen Alkoholen wie Isodecylalkohol, Isoundecylalkohol, Isotridecylalkohol, aus natürlichen Rohstoffen hergestellte Fettalkohole usw. infrage. Desweiteren kommen infrage: alkoxylierte Phenole z.B. basierend auf: Phenol, alkylsubstituierten Phenolen, z.B. t-Butylphenol, 2,6-Dimethylphenol, isomere Gemische techn. Alkylphenole, z.B. Octylphenol, Nonylphenol, Dinonylphenol, Naphthol, alkylsubstituierte Naphthole, weiter kommen infrage EO/PO-Anlagerungsprodukte an substituierte Alkohole z.B.: Furfurol, Tetrahydrofurfurol, 2-Methoxybutanol, 3-Methoxybutanol, 2-Dimethylaminoethanol, 2-Diethylaminoethanol, 1-Dimethylamino-2-propanol, 3-Dimethylamino-1-propanol, 2-Morpholinoethanol, 2-(2-Pyridyl)ethanol, N-(2-Hydroxyethyl)-piperidin, N-(2-Hydroxyethyl)pyrrolidin, N-(2-Hydroxyethyl)pyrrolidon.
Genannt seien z.B. Alkohole, die ein (statistisches) Anlagerungsprodukt von Ethylenoxid und Propylenoxid an einen Alkohol wie z.B. Butanol darstellen. Das molare Verhältnis der Ethylenoxid- und Propylenoxideinheiten in der Monomerkomponente B) kann zwischen 96 zu 4 und 6 zu 94 betragen. Als Anhalt für das Molekulargewicht von bevorzugten Monomeren der Formel II sei der Bereich um ca. 2 000 Dalton angegeben. Dies stellt jedoch keine Limitierung dar. Je nach Alkoxylierungsgrad (n + m, Formel II) und je nach Größe des Restes R₂ können auch höhere Molekulargewichte bis ca. 5000 Dalton erreicht werden. Die Monomeren der Formel II können selbst als Mischung bestehend aus Methacrylaten der verschiedenen oben beschriebenen alkoxylierten Alkohole vorliegen.

Die Monomeren der Formel III, stellen die radikalisch polymerisierbaren 1-Alkene mit 4 bis 32 Kohlenstoffatomen dar. Genannt seien insbesondere die C₄-C₁₆-Alkene, zum Beispiel das 1-Decen, 1-Octen, 1-Dodecen, 1-Tetradecen, 1-Hexadecen und auch 1-Octadecen, 1-Eicosen.
Die Herstellung der dispergierwirksamen Oligomeren (CNP-O) wird nach den Regeln und Erfahrungen der Radikalpolymerisation vorgenommen (vgl. C.H. Bamford, Encyclopedia of Polymer Science, Vol. 13, 708, 2nd. Ed. (1988)).

Vorzugsweise erfolgt die Polymerisation in Form einer Lösungspolymerisation in einem geeigneten organischen Lösungsmittel L.
Beim Lösungsmittel L kann es sich demnach handeln:
a) um ein hochsiedendes inertes Lösungsmittel wie z.B. Decahydronaphtalin (Decalin ®, KP > 180 Grad C), Dodecylbenzol (KP > 275 Grad C), tert.-Butylbenzol (KP = 169 Grad C), Dodecan (KP = 216 Grad C) oder
b) vorteilhafterweise um Lösungsmittel, die bei radikalischen Polymerisationen bekanntermaßen eine das Molekulargewicht regelnde Wirkung besitzen, wie z.B. 1,2,3,4-Tetrahydronaphtalin (Tetralin, KP = 207 Grad C), Cycloocten (KP = 144 Grad C), technisches Dipenten (= Gemisch von Terpenkohlenwasserstoffen KP > 170 Grad C) oder um Lösungsmittelgemische aus den unter a) und b aufgeführten Komponenten oder
c) vorteilhafterweise kann anstelle des organischen Lösungsmittels L auch das Produkt selbst (d.h. CNP-O) oder ein anderes CNP-O'mit verschiedener chemischer Zusammensetzung und anderem Molekulargewicht eingesetzt werden. In diesem Fall erübrigt sich zum einen das Abdestillieren des Lösungsmittels L, und zum anderen können Mischungen von dispergierenden Oligomeren mit sich ergänzender Wirkung direkt hergestellt werden (= Beispiel 7)

Als Initiatoren kommen an sich bekannte, insbesondere organische Radikalinitiatoren IN, vorzugsweise mit einer Zerfallstemperatur bei normierten Halbwertszeitbedingungen im Bereich 90 - 130 Grad C (vgl. H. Logemann in Houben-Weyl, Methoden der Organ. Chemie, 4. Aufl., Bd. XIV/I, S. 248, Georg Thieme (1961); Brandrup Immergut, Polymer Handbook 3rd Ed., II-1, J. Wiley 1989) beispielsweise aus der Gruppe der organ. Peroxyverbindungen, insbesondere mit tertiären Alkylresten, beispielsweise des 2,2-Bis(tert.Butyl-peroxy)butan, tert-Butylperbenzoat, Di-tert-Butylperoxid, und Cumolhydroperoxid infrage.

In der Regel werden die Initiatoren in Mengen von ca. 0,01 bis 2 Gew.-% bezogen auf die Monomeren eingesetzt. Die Polymerisationstemperaturen liegen im allgemeinen relativ hoch, beispielsweise oberhalb 120 Grad C und bis ca. 160 Grad C, vorteilhaft bei ca. 140 Grad C.

Im einzelnen kann so verfahren werden, daß man in einem geeigneten Reaktor, beispielsweise einem mit Gaseinlaß, Rührvorrichtung, Destillationsaufsatz und Thermometer ausgestatteten Dreihalskolben vorzugsweise unter einem Schutzgas wie Stickstoff, das auf Polymerisationstemperatur - beispielsweise auf 140 Grad C - vorgewärmte Lösungsmittel L vorlegt und dazu das Gemisch der Monomeren über einen gewissen Zeitraum - beispielsweise während 3 Stunden kontinuierlich zudosiert. Die Vorlage mit dem Monomerengemisch wird unter Rühren auf 50 Grad C gehalten. Nach Zulaufende wird bei Polymerisationstemperatur, beispielsweise bei 140 Grad C in kürzeren Abständen, beispielsweise nach je 30 Minuten portionsweise Initiator zudosiert, wobei der Initiator vorteilhafterweise in einem organischen Lösungsmittel, (z.B. 50 %-ig in einem aliphatischen Lösungsmittel) zugesetzt wird. Der Zugabevorgang erstreckt sich üblicherweise über Stunden; als Anhalt seien etwa 8 Stunden angegeben. Etwa 1/2 Stunde nach der letzten Zugabe kühlt man auf eine Temperatur ab, bei der sich das Lösungsmittel L günstig abziehen läßt, vorzugsweise bei Drucken im Millibar-Bereich, z.B. im Ölpumpenvakuum.

### Vorteilhafte Wirkungen

Die erfindungsgemäßen Cooligomeren und Copolymeren (CNP) besitzen hervorragende Emulgator-Wirkung. Sie eignen sich ausgezeichnet zur Stabilisierung von Wasser-in-Öl-Emulsionen (W/O-Emulsionen). Diese Eigenschaften können sehr gut im T/W-(Toluol/Wasser)-Test nachgewiesen werden, der speziell als Screening-Test für diese Wirkung entwickelt wurde.

Die Anwendung dieser dispergierenden Oligomeren bzw. Copolymeren ("d-Oligomer") ist von besonderer Bedeutung für die Additivierung von Schmierölen als "Ashless Dispersants". Aufgrund ihrer ausgezeichneten Wirkung kommen sie aber auch für viele andere Anwendungsgebiete infrage, z.B. als dispergierende Additive für Getriebeölformulierungen (ATF), Emulgatoren für W/O- oder O/W-Emulsionen, z.B. als Emulgatoren für die Emulsionspolymerisation, als Stabilisatoren für Dispersionen anorganischer und organischer Partikel in Lösungsmitteln, z.B. in Dispersionsfarben, als Hilfsmittel für Klebstoffe, z.B. zu besseren Benetzung von Oberflächen, zur Oberflächenbehandlung: Hydrophobieren von polaren Oberflächen und umgekehrt Hydrophilieren von unpolaren Oberflächen, als Compatibilizer für Polymer Blends, Weichmacher bzw. Zähmodifier für relativ polare Kunststoffe, Phasentransferkatalysatoren für heterogene Reaktionssysteme (W/O), Hilfsmittel zur Verbesserung der biologischen Abbaubarkeit von wasserunlöslichen Ölen (durch verbesserte Öl/Wasser Dispergierung, Verwendung als dispergierendes Kraftstoffadditiv.

Die folgenden Beispiele dienen zur Erläuterung der Erfindung.

### BEISPIELE

### A. Allgemeine Herstellungsverfahren

| Materialien: | |
|---|---|
| Monomer I-1 = | Methacrylsäureester des Alkohols DOBANOL ® 25l (Shell AG), Gemisch aus C₁₁-C₁₆-Alkoholen, C-Zahl 13,2 - 13,8, Gehalt an n-Alkoholen = 72 - 82 %. |
| | |
| Monomer I-2 = | Methacrylsäureester eines Alkoholgemischs aus isomeren Isodecylalkoholen |
| | |
| Monomer II-1 = | Methacrylsäureester von alkoxyliertem Butanol (=statisches Anlagerungsprodukt von Ethylenoxid und Propylenoxid im Gew.- Verhältnis 80 : 20 an Butanol bzw. Ethylenglykolmonobutylether, M_{w} = 2 000 Dalton |
| | |
| Alken = | 1-Decen |
| | |
| Initiatorlösung IN-1 = | 2,2-Bis-(t-butylperoxy)butan 50 Gew.-% gelöst in Aliphaten (Produkt INTEROX ® BU-50-Al der Fa. Interox Corp.) |
| | |
| Lösungsmittel L = | Tetralin, Decalin (Isomerengemisch) |

### Beispiel 1

### Herstellung eines dispergierwirksamen Oligomeren in Tetralin

Im Dreihalskolben mit Magnetrührer, Thermometer, Destillationsaufsatz und N₂-Einleitung werden 93 g Tetralin vorgelegt und unter N₂ auf 140 Grad C erwärmt. In das heiße Lösungsmittel wird ein Gemisch aus

| | |
|---|---|
| 40,1 g | Tetralin |
| 40,1 g | Monomer II-1 |
| 146,4 g | Monomer I-1 |
| 13,4 g | 1-Decen |

innerhalb von 3 Stunden kontinuierlich zugepumpt. Die Vorlage mit dem Monomerengemisch wird auf 50 Grad C erwärmt und gerührt. Nach Zulaufende wird bei 140 Grad C 16 mal im Abstand von 30 min jeweils 0,25 ml IN-1-Initiatorlösung zudosiert. 30 min nach der letzten Zugabe wird auf 60 Grad C abgekühlt und im Vakuum (2mbar) das Tetralin/Decen abdestilliert bis zu einer Sumpftemperatur von 163 Grad C.
Ausbeute: 191 g dispergierwirksames Oligomer

### Beispiel 2

### Herstellung eines dispergierwirksamen Oligomeren in Tetralin

Im Dreihalskolben mit Magnetrührer, Thermometer, Destillationsaufsatz und N₂-Einleitung werden 1120 g Tetralin vorgelegt und unter N₂ auf 140 Grad C erwärmt. In das heiße Lösungsmittel wird ein Gemisch aus

| | |
|---|---|
| 347,8 g | Monomer II-1 |
| 692,1 g | Monomer I-2 |
| 640,0 g | Monomer I-1 |
| 84,0 g | Oligomer aus Beispiel 1 |
| 10,10 g | Initiatorlösung IN-1 |

innerhalb von 3 Stunden kontinuierlich zugepumpt. Die Vorlage mit dem Monomerengemisch wird auf 50 Grad C erwärmt und gerührt. Nach Zulaufende wird bei 140 Grad C 16 mal im Abstand von 30 min jeweils 2,07 ml IN-1-Initiatorlösung zudosiert. 30 min nach der letzten Zugabe wird auf 60 Grad C abgekühlt und im Vakuum (2 mbar) das Tetralin abdestilliert bis zu einer Sumpftemperatur von 163 Grad C.
Ausbeute: 1747 g dispergierwirksames Oligomer

### Beispiel 3

### Herstellung eines dispergierwirksamen Oligomeren in 1-Decen

Im Dreihalskolben mit Magnetrührer, Thermometer, Destillationsaufsatz und N₂-Einleitung werden 650 g 1-Decen vorgelegt und unter N₂ auf 140 Grad C erwärmt. In das heiße Lösungsmittel wird ein Gemisch aus

| | |
|---|---|
| 153,4 g | Monomer II-1 |
| 496,6 g | Monomer I-1 |
| 32,5 g | Oligomer aus Beispiel 1 |
| 3,90 g | Initiatorlösung IN-1 |

innerhalb von 3 Stunden kontinuierlich zugepumpt. Die Vorlage mit dem Monomerengemisch wird auf 50 Grad C erwärmt und gerührt. Nach Zulaufende wird bei 140 Grad C 16 mal im Abstand von 30 min jweils 0,80 ml IN-1-Initiatorlösung zudosiert. 30 min nach der letzten Zugabe wird auf 60 Grad C abgekühlt und im Vakuum (2 mbar) das 1-Decen abdestilliert bis zu einer Sumpftemperatur von 163 Grad C.
Ausbeute: 905 g dispergierwirksames Oligomer

### Beispiel 4

### Herstellung eines dispergierwirksamen Oligomeren in 1-Decen

Im Dreihalskolben mit Magnetrührer, Thermometer, Destillationsaufsatz und N₂-Einleitung werden 175 g 1-Decen vorgelegt und unter N₂ auf 140 Grad C erwärmt. In das heiße Lösungsmittel wird ein Gemisch aus

| | |
|---|---|
| 41,3 g | Monomer II-1 |
| 133,7 g | Monomer I-2 |
| 1,05 g | Initiatorlösung IN-1 |

innerhalb von 2 Stunden kontinuierlich zugepumpt. Die Vorlage mit dem Monomerengemisch wird auf 50 Grad C erwärmt und gerührt. Nach Zulaufende wird bei 140 Grad C 16 mal im Abstand von 30 min jeweils 0,22 ml IN-1-Initiatorlösung zudosiert. 30 min nach der letzten Zugabe wird auf 60 Grad C abgekühlt und im Vakuum (2 mbar) das 1-Decen abdestilliert bis zu einer Sumpftemperatur von 163 Grad C.
Ausbeute: 240 g dispergierwirksames Oligomer

### Beispiel 5

### Herstellung eines dispergierwirksamen Oligomeren in Tetralin

Im Dreihalskolben mit Magnetrührer, Thermometer, Destillationsaufsatz und N₂-Einleitung werden 75 g Tetralin vorgelegt und unter N₂ auf 140 Grad C erwärmt. In das vorgelegte heiße Lösungsmittel wird dann ein Gemisch aus

| | |
|---|---|
| 45,0 g | Tetralin |
| 54,0 g | Monomer II-1 |
| 126,0 g | Monomer I-1 |
| 1,44 g | Initiatorlösung IN-1 |

innerhalb von 4 Stunden kontinuierlich zugepumpt. Nach Zulaufende wird bei 140 Grad C 14 mal im Abstand von 30 min jeweils 0,22 ml IN-1-Initiatorlösung zudosiert. 30 min nach der letzten Zugabe wird auf 60 Grad C abgekühlt und langsam unter Vakuum (1 mbar) das Tetralin abdestilliert bis zu einer Sumpftemperatur von 162 Grad C
Ausbeute: 184 g dispergierwirksames Oligomer

### Beispiel 6

### Herstellung eines dispergierwirksamen Oligomeren in einem d-Oligomeren

Im Dreihalskolben mit Magnetrührer, Thermometer, Destillationsaufsatz und N₂-Einleitung werden 60 g Oligomer aus Beispiel 2 vorgelegt und unter N₂ auf 140 Grad C erwärmt. In das heiße Oligomer wird ein Gemisch aus:

| | |
|---|---|
| 50,4 g | Monomer II-1 |
| 98,4 g | Monomer I-2 |
| 91,2 g | Monomer I-1 |
| 2,4 g | Dodecylmercaptan |
| 11,52g | Initiatorlösung IN-1 |

innerhalb von 3,5 Stunden kontinuierlich zugepummpt. Die Vorlage mit dem Monomerengemisch wird dabei auf 50 Grad C erwärmt und gerührt. Nach Zulaufende wird bei 140 Grad C drei mal im Abstand von 30 min je 0,48 g IN-1-Initiatorlösung zudosiert. Nach der letzten Zugabe wird noch 30 min auf 140 Grad C gehalten.
Ausbeute: 200 g dispergierwirksames Oligomer

### B. Testergebnisse

Die Testergebnisse mit den Produkten aus den Herstellungsbeispielen sind in der folgenden TABELLE zusammengefaßt. Darin bedeutet:

| | |
|---|---|
| KV 100 = | Kinematische Viskosität bei 100 Grad C [mm²s⁻¹] nach DIN 51 561 |
| | |
| KV 40 = | Kinematische Viskosität bei 40 Grad C [mm²s⁻¹] nach DIN 51 561 |
| | |
| VI B = | Viskositäts-Index |
| | |
| T/W-Test= | Der T/W-Test wird wie folgt ausgeführt: |

### Durchführung des Toluol/Wasser-Dispergiertests:

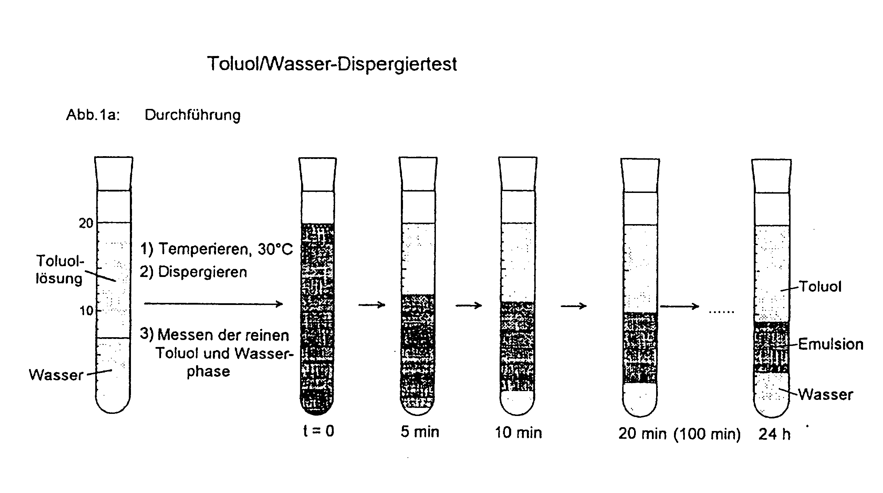

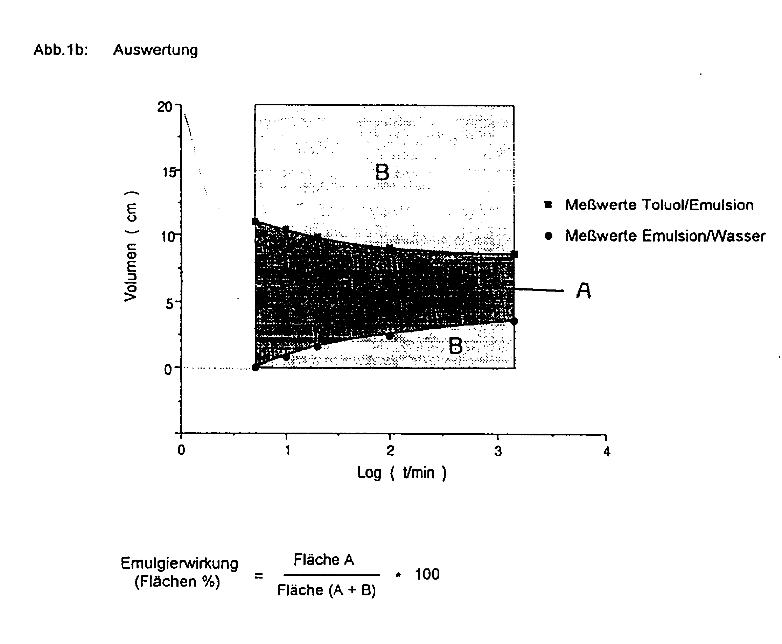

Das auf seine Emulgierwirkung zu prüfende Additiv wird in Toluol (versetzt mit 20 ppm Oracetblau B) mit einer Polymerkonzentration von 1 Gew.-% gelöst. In ein graduiertes 20 ml Schliffreagenzglas werden nacheinander 7 ml dest. Wasser und 13 ml der 1 %igen Toluollösung eingefüllt und 15 min im Wasserbad bei 30 Grad C temperiert. Durch heftiges Schütteln des Reagenzglases wird eine gleichförmige Emulsion erzeugt und die Probe in das Temperierbad zurückgestellt. Das Auftrennen der Emulsion in die Schichten Touol, Emulsion und Wasser wird über einen Zeitraum von 24 Stunden beobachtet. Hierzu wird zu den Zeiten 5 min, 10 min, 100 min und 24 Stunden die Schichtgrenze Toluol/Emulsion sowie die Schichtgrenze Emulsion/Wasser anhand der Graduierung abgelesen (s. Abb. 1a).

### Auswertung:

Die Quantifizierung der Emulgierwirkung in %-Werten erfolgt nach dem in Abbl. 1b gezeigten Schema. Hierbei wird der Anteil der im Beobachtungszeitraum 5 min - 24 Stunden vorliegenden Emulsion durch das Verhältnis der Fläche A zur Gesamtfläche A + B charakterisiert und in %-Werten angegeben.

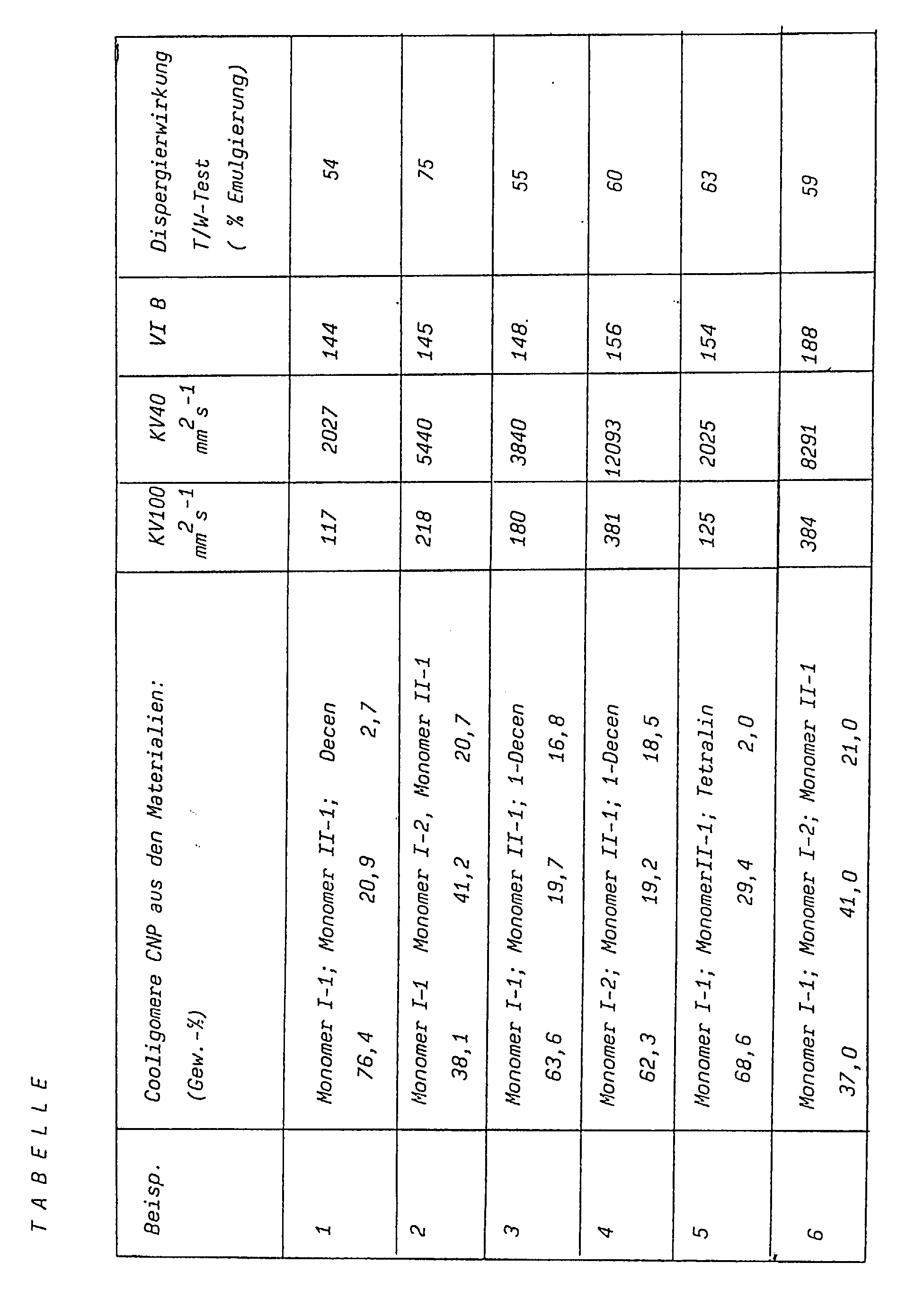

## Patentansprüche

1. Dispergierwirksame Cooligomere und Copolymere auf Basis von (Meth)acrylsäureestern als Emulgatoren,
dadurch gekennzeichnet,
daß die Cooligomeren und Copolymeren(CNP) aufgebaut sind aus den Monomerkomponenten
A) 60 - 95 Gew.-% mindestens eines (Meth)acrylsäureesters der Formel I 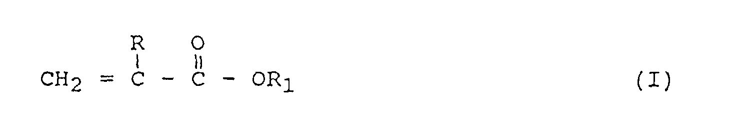 worin R für Wasserstoff oder Methyl und R₁ für einen gegebenenfalls verzweigten Alkylrest oder einen Cycloalkylrest mit 4 bis 32 Kohlenstoffatomen im Alkylrest und
B) 5 - 40 Gew.-% mindestens eines (Meth)acrylsäureesters der Formel II 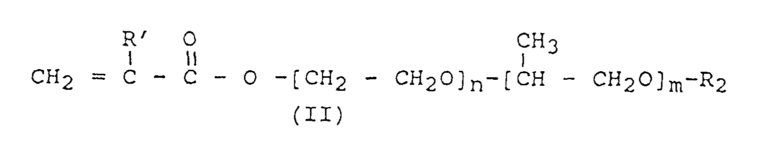 worin R' für Wasserstoff oder Methyl und R₂ für einen Alkyl- oder einen Arylrest mit 1 bis 50 Kohlenstoffatomen steht, wobei R₂ selbst durch Stickstoff oder Schwefel substituiert sein kann und worin n einen Zahlenwert 5 bis 100 und m einen Zahlenwert 0 bis 100 darstellen kann und zu 0 bis 90 Molprozent bezogen auf die Monomeren der Formel II eines Hydroxylalkyl(meth)acrylsäureesters der Formel (III) 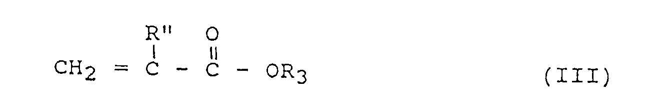 worin R" für Wasserstoff oder Methyl und R₃ für einen mit mindestens einer Hydroxylgruppe substituierten Alkylrest mit 2 bis 30 Kohlenstoffatomen steht und
mit der Maßgabe, daß sich A) und B) zu 100 Gew.-% ergänzen und
C) 0 - 75 Gew.-Teile bezogen auf die Summe von A) und B) mindestens eines 1-Alkens mit 4 bis 42 Kohlenstoffatomen im Molekül, wobei die Cooligomeren und Copolymeren (CNP) bei Bestimmung durch Gelpermeationschromatographie Molekulargewichte (M_{w}) von 1000 bis 30000 Dalton besitzen.

2. Dispergierwirksame Cooligomere und Copolymere (CNP) gemäß Anspruch 1, dadurch gekennzeichnet, daß die Monomerkomponente B) aus Ethylenoxid- und Propylenoxideinheiten im molaren Verhältnis 96 zu 4 bis 6 zu 94 aufgebaut ist.

3. Dispergierwirksame Cooligomere und Copolymere (CNP) gemäß Anspruch 2, dadurch gekennzeichnet, daß die Ethylenoxid- und die Propylenoxideinheiten statistisch verteilt sind.

4. Dispergierwirksame Cooligomere und Copolymere (CNP) gemäß den Ansprüchen 1 bis 3, dadurch gekennzeichnet, daß der Rest R₂ der Monomeren der Formel II mit mindestens einer Gruppe -NR₄R₅, substituiert ist, wobei R₄ und R₅ unabhängig voneinander für einen Alkylrest mit 1 bis 20 Kohlenstoffatomen stehen oder worin R₄ und R₅ unter Einbeziehung des Stickstoffatoms und gegebenenfalls eines weiteren Sauerstoff- oder Stickstoffatoms einen fünf- oder sechsgliedrigen Ring bilden, der mit einem Alkylrest mit 1 bis 6 Kohlenstoffatomen substituiert sein kann.

## Claims

1. Diepersant cooligomers and copolymers on the basis of (meth)acrylates as emulsifiers, characterised in that the cooligomers and copolymers (CNP) are built up from the monomer components
A) 60 - 95% by weight of at least one (meth)acrylate of formula 1 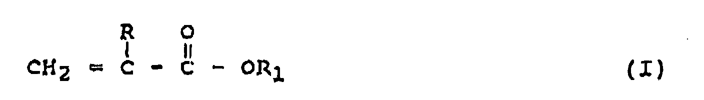 wherein R denotes hydrogen or methyl and R₁ denotes an optionally branched alkyl group or a cycloalkyl group with 4 to 32 carbon atoms in the alkyl group and
B) 5 - 40% by weight of at least one (meth)acrylate of formula II 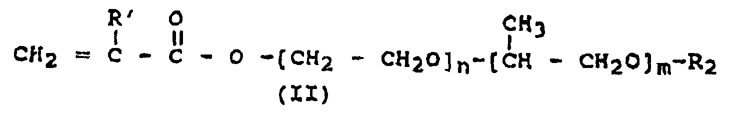 wherein R' denotes hydrogen or methyl and R₂ denotes an alkyl or aryl group with 1 to 50 carbon atoms, wherein R₂ itself can be substituted by nitrogen or sulphur and wherein n denotes a numerical value 5 to 100 and m denotes a numerical value 0 to 100 and comprising o to 90 molar percent, in relation to monomers of formula II of a hydroxylalkyl(meth)acrylate of formula (III) 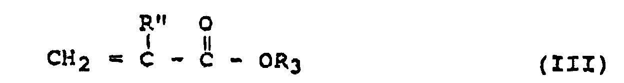 wherein R" denotes hydrogen or methyl and R₃ denotes an alkyl group substituted with at least one hydroxyl group with 2 to 30 carbon atoms and
with the proviso that A) and B) combine to form 100% and
c) 0 - 75% by weight, in relation to the sum of A) and B) of at least one 1-alkene with 4 to 42 carbon atoms in the molecule, wherein the cooligomers and copolymers (CNP), on determination by gel permeation chromatography, have molecular weights (M_{w}) of 1 000 to 30 000 Daltons.

2. Dispersant cooligomers and copolymers (CNP) according to claim 1, characterised in that the monomer components B) are built up of ethylene oxide and propylene oxide components in the molar ratio 96 : 4 to 6 : 94.

3. Dispersant cooligomers and copolymers (CNP) according to claim 2, characterised in that the ethylene oxide and propylene oxide units are statistically distributed.

4. Dispersant cooligomers and copolymers (CNP) according to claims 1 to 3, characterised in that the group R₂ of monomers of formula II is substituted by at least a group NR₄R₆, wherein R₄ and R₅, independently from one another, denote an alkyl group with 1 to 20 carbon atoms or wherein R₄ and R5 form a five- or six-element ring, on inclusion of the nitrogen atom and optionally a further oxygen or nitrogen atom, which can be substituted by an alkyl group with 1 to 6 carbon atoms.

## Revendications

1. Cooligomères et copolymères à action dispersante à base d'esters d'acide (méth)acrylique comme agents émulsionnants,
caractérisé en ce que
les cooligomères et les copolymères (CNP) sont constitués de composants monomères qui renferment,
A) de 60 à 95 % en poids d'au moins un ester d'acide (méth)acrylique de formule I 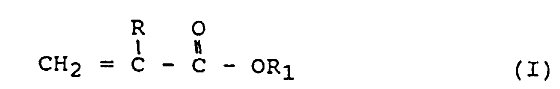 dans laquelle R représente de l'hydrogène ou un méthyle, et R₁ représente un radial alkyle éventuellement ramifié ou un radical cycloalkyle ayant de 4 à 32 atomes de carbone dans le radical alkyle et,
B) de 5 à 40 % en poids d'au moins un ester d'acide (méth)acrylique de formule II 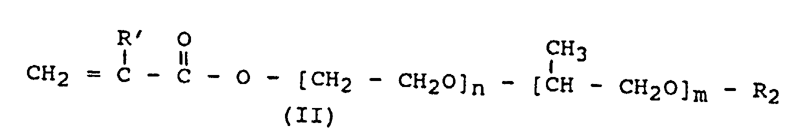 dans laquelle R' représente de l'hydrogène ou un méthyle et R² représente un radical alkyle ou aryle ayant de 1 à 50 atomes de carbone, dans laquelle R₂ lui-même peut être substitué par de l'azote ou du soufre et dans laquelle n peut représenter une valeur numérique allant de 5 à 100 et m une valeur numérique allant de 0 à 100 et pour de 0 à 90 % molaire rapporté aux monomères de formule II un ester d'hydroxyalkyle d'acide (méth)acrylique de formule III, 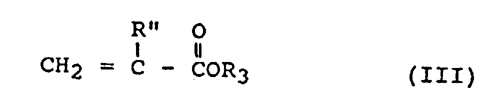 dans laquelle R" représente de l'hydrogène ou un méthyle et R3 représente un radical alkyle substitué par au moins un groupe hydroxyle ayant de 2 à 30 atomes de carbone et avec la restriction que A) et B) se complètent à 100 % en poids.
C) 0 - 75 parties en poids rapporté à la somme de A) et de B) d'au moins un 1-alkène ayant de 4 à 42 atomes de carbone dans la molécule dans laquelle les cooligomères et les copolymères (CNP) possèdent par détermination par chromatographie par perméation de gel des poids moléculaires (M_{W}) allant de 1000 à 30.000 Daltons.

2. Cooligomères et copolymères à action dispersante (CNP) conformément à la revendication 1,
caractérisés en ce que
le composant monomère B) est constitué d'unités d'oxyde d'éthylène et d'oxyde de propylène dans un rapport molaire allant de 96 pour 4 à 6 pour 94.

3. Cooligomères et copolymères à action dispersante (CNP) conformément à la revendication 2,
caractérisés en ce que
les unités d'oxyde d'éthylène et les unités d'oxyde de propylène sont distribuées statistiquement.

4. Cooligomères et copolymères à action dispersante (CNP) conformément aux revendications 1 à 3,
caractérisés en ce que
le radical R₂ des monomères de formule II est substitué par au moins un groupe NR₄R₅ dans lequel R₄ et R₅, indépendamment l'un de l'autre, représentent un radical alkyle ayant de 1 à 20 atomes de carbone ou dans lequel R₄ et R₅ impliquant l'atome d'azote et le cas échéant un autre atome d'oxygène ou d'azote, forment un cycle à cinq ou six maillons qui peut être substitué par un radical alkyle ayant de 1 à 6 atomes de carbone.
